# EUROPÄISCHE PATENTSCHRIFT

(11) **EP 0 268 009 B1**
(45) Veröffentlichungstag und Bekanntmachung des Hinweises auf die Patenterteilung: **25.08.1993**
(21) Anmeldenummer: 87106466.3
(22) Anmeldetag: 05.05.1987
(51) Int. Cl.: B01D 27/02, B01D 27/06, B01D 36/00

(54) **Filterpatrone**
Filter cartridge
Cartouche de filtration

(30) Priorität: 23.10.1986 DE 8628284 U
(43) Veröffentlichungstag der Anmeldung: 25.05.1988
(73) Patentinhaber: LEYBOLD AKTIENGESELLSCHAFT, 50968 Köln (DE)
(72) Erfinder: Bachmann, Paul, Dr., D-5000 Köln 40 (DE); Berges, Hanns-Peter, Dr., D-5000 Köln 90 (DE); Leier, Wolfgang, D-5060 Bergisch-Gladbach 1 (DE)
(74) Vertreter: Leineweber, Jürgen, Dipl.-Phys.

(56) Entgegenhaltungen:
- BE-A- 637 246
- DE-A- 1 786 334
- DE-A- 2 616 954
- DE-U- 8 329 813
- FR-A- 2 414 940
- GB-A- 2 012 178

## Beschreibung

Die Erfindung bezieht sich auf eine Filterpatrone zur Reinigung des Öls einer ölgedichteten Vakuumpumpe, welche austauschbar an der Vakuumpumpe befestigt ist und aluminiumhaltige Filtermaterialien enthält. Filterpatronen dieser Art sind in den Ölkreislauf der Vakuumpumpe eingeschaltet und ständig vom Öl durchströmt. Bei den in der Vakuumpume verwendeten Ölen kann es sich um Mineralöle, synthetische Schmiermittel, z.B. perfluorierte Kohlenwasserstoffe, oder dergleichen handeln.

Eine Filterpatrone dieser Art ist aus dem DE-U-83 29 813 bekannt. Als Filtermaterial enthält die vorbekannte Filterpatrone aktiviertes Alumniniumoxid. Dieses Filtermaterial ist dazu geeignet, Ölalterungsprodukte und polare Verunreinigungen aus dem flüssigen Schmiermittel der Vakuumpumpe zu entfernen (chemische Wirkung). Darüber hinaus ist die Körnung des Filtermaterials derart fein gewählt, daß ein Abfangen von Feststoffteilchen bis zu einer Korngröße von 1 µm möglich ist (mechanische Wirkung). Beim Einsatz der vorbekannten Filterpatronen hat sich herausgestellt, daß die Filterschicht relativ früh einen relativ hohen Widerstand aufbaut, so daß sich das in Filterpatronen der bekannten Art üblicherweise eingebaute Umgehungsventil öffnet. Bei offenem Umgehungsventil strömt das flüssige Schmiermittel ungefiltert durch den Pumpenkreislauf.

Aus der DE-A-17 86 334 ist ein Öl-Nebenstromfilter für Verbrennungsmotoren bekannt. Dieser nicht als Wechselpatrone ausgebildete Filter enthält eine von einem Filterpapier umgebene Holzkohlenfüllung, die der Beseitigung von Schwefelsäure dient.

Der vorliegenden Erfindung liegt die Aufgabe zugrunde, die Standzeit der eingangs erwähnten Ölfilter wesentlich zu erhöhen, ohne auf das Filterkonzept, d.h., die Filtrierung des flüssigen Schmiermittels einer Vakuumpumpe in einer Wechselpatrone, verzichten zu müssen.

Erfindungsgemäß wird diese Aufgabe durch die Maßnahme entsprechend den Patentansprüchen gelöst.

Diese Erfindung beruht auf der Erkenntnis, daß die Ursache für den relativ frühen Aufbau des hohen Widerstandes über der Filterschicht der vorbekannten Filterpatrone Feststoffteilchen und Gele sind, die das wegen der relativ kleinen Körnung dicht gepackte Filtermaterial zusetzen. Durch die erfindungsgemäße Ausrüstung der Filterpatrone mit zwei Filterstufen mit unterschiedlichen Eigenschaften besteht die Möglichkeit, eine mechanisch wirkende und eine chemisch wirkende Filterstufe hintereinander anzuordnen und somit die chemisch wirkende Filterstufe von der Aufgabe, auch Feststoffteilchen abfangen zu müssen, zu befreien. Die Körnung der vorzugsweise in Form eines Granulates aus aktiviertem Aluminiumoxid vorliegenden, chemisch wirksamen Filterschicht kann relativ grob, z.B. von 0,5 bis 5 mm, vorzugsweise 1 bis 3 mm, gewählt werden. Die chemische Wirksamkeit dieser Filterschicht ist dadurch gegenüber einer Filterschicht mit kleinerer Körnung nicht beeinträchtigt. Die dieser chemisch wirkenden Filterschicht vorgelagerte mechanisch wirkende Filterstufe, welche zweckmäßigerweise als Papierfilter ausgebildet ist, übernimmt die Abscheidung von Feststoffteilchen und Gelen, welche somit die chemisch wirkende Filterschicht nicht mehr belasten. Neben Aluminiumoxid können auch andere aluminiumhaltigen Ad- oder Absorbenten, wie Bleicherde, verwendet werden.

Die erfindungsgemäße Lösung stellt eine einfache und für Vakuumpumpen effektive Kombination eines mechanischen Filters mit einem chemischen Tiefenfilter dar. Die Standzeit von Filterpatronen dieser Art ist je nach Filtrationsaufgabe um bis zu 100 % höher als die Standzeit vorbekannter Filterpatronen, da die Vereinigung verschiedener Filterprinzipien in einer Patrone eine verbesserte Ausnutzung der Filtermaterialien ermöglicht. Gleichzeitig ist damit der Vorteil einer Standzeitverlängerung der flüssigen Dichtmittel der Vakuumpumpen verbunden.

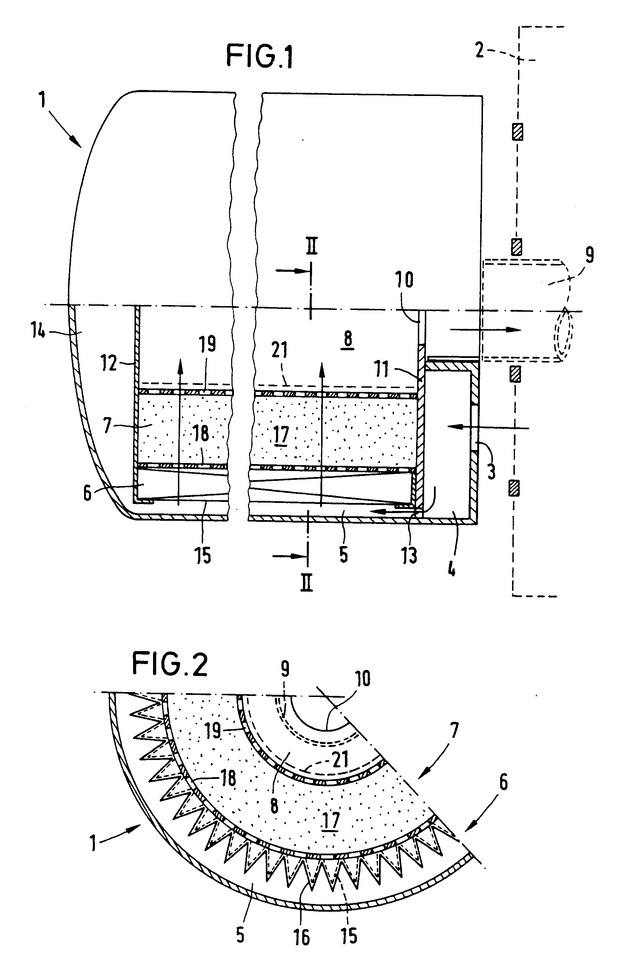

Weitere Vorteile und Einzelheiten der Erfindung sollen anhand eines in den Figuren 1 und 2 dargestellten Ausführungsbeispieles erläutert werden.

Die Figuren zeigen einen Teillängsschnitt bzw. einen Teilquerschnitt durch eine Filterpatrone 1 der erfindungsgemäßen Art. Die Patrone 1 ist lösbar an dem gestrichelt angedeuteten Gehäuse 2 einer Vakuumpumpe befestigt. Die Art und Weise der Befestigung kann z.B. derart gestaltet sein, wie es im älteren DE-U-83 29 813 offenbart ist. Gleichzeitig mit der Befestigung der Filterpatrone 1 auf dem Gehäuse 2 der Vakuumpumpe erfolgt die dichte Verbindung der in der Vakuumpumpe befindlichen Ölströmungskanäle mit den in der Patrone 1 befindlichen Ölströmungskanälen.

Beim dargestellten Ausführungsbeispiel tritt das das Gehäuse 2 verlassende, zu reinigende flüssige Schmiermittel durch eine stirnseitige Öffnung 3 in der Filterpatrone 1 in einen stirnseitig angeordneten Ringraum 4 ein. Von dort aus strömt das Schmiermittel in den Ringraum 5, der die konzentrisch angeordneten Filterstufen 6 und 7 umgibt. Nach dem Durchströmen dieser Filterstufen gelangt das Schmiermittel in einen zentralen Raum 8, der über die Leitung 9 mit dem im Gehäuse 2 der Vakuumpumpe befindlichen Ölkreislauf verbunden ist.

Der Halterung der Filterstufen 6 und 7 und der beschriebenen Führung des zu reinigenden Schmiermittels dient eine innerhalb der Patrone 1 befindliche Gehäusestruktur, die unter anderem zwei stirnseitig angeordnete Platten 11 und 12 umfaßt. Die Platte 11 ist mit den Verbindungsöffnungen 13 zwischen den Ringräumen 4 und 5 und mit der Verbindungsöffnung 10 zwischen dem Zentralraum 8 und der Leitung 9 versehen. Die Platte 12 schließt den Zentraraum 8 zum übrigen Innenraum 14 der Patrone ab. Im Zentrum der Platte 12 ist üblicherweise ein - nicht dargestelltes - Umgehungsventil vorgesehen. Dieses öffnet, wenn die Filterschichten 6 und 7 blockiert sind und der Druck des zuströmenden Öls einen bestimmten Grenzdruck übersteigt. Da der Ringraum 5 mit dem Raum 14 verbunden ist, kann das Schmiermittel in diesem Fall direkt und ungefiltert in den Zentralraum 8 zurückströmen.

Zwischen den beiden Platten 11 und 12 sind die beiden Filterstufen 6 und 7 gehaltert. Die Filterstufe 6 besteht aus einem gefalteten Papierfilter 15, dessen Falten sich axial erstrecken. Da chemisch reaktive Substanzen das Papier aushärten und damit brüchig werden lassen, ist dem gefalteten Papierfilter ein ebenfalls gefaltetes, siebartiges Stützgewebe 16 zugeordnet, das dem Papierfilter 15 abströmseitig anliegt. Das Filtermaterial kann ein für Mineralöle oder dergleichen geeignetes Filterpapier sein, das - z. B. nach der Bildung eines Filterbettes - dazu geeignet ist, Feststoffteilchen bis in den Sub-µm-Bereich aufzufangen. Auch gelartige Substanzen läßt ein Filtermaterial dieser Art nicht durch.

An die mechanisch wirkende Filterstufe 6 schließt sich die chemisch wirkende Filterstufe 7 an. Diese Filterstufe 7 umfaßt die Filterschicht 17, die aus relativ grobkörnigem aktivierten Aluminiumoxid besteht. Zur Stützung des Filtergranulats dienen die konzentrischen Lochmaterial-Wandungen 18 und 19, die sich zwischen den beiden stirnseitig angeordneten Platten 11 und 12 erstrecken.

Bei einer Variante der in den Figuren 1 und 2 dargestellten Ausführungsform einer erfindungsgemäßen Filterpatrone kann zusätzlich noch eine dritte Filterstufe innerhalb der chemisch wirkenden Filterstufe 7 angeordnet sein. Diese ist gestrichelt angedeutet und mit 21 bezeichnet. Sie kann z. B. ebenfalls als Papierfilter ausgebildet sein, das in der Lage ist, besonders feine Feststoffpartikel (kleiner als 1 µm) zurückzuhalten. In diesem Fall besteht die Möglichkeit, die Durchlässigkeit des Filterpapiers 15 etwas gröber zu wählen.

## Patentansprüche

1. Filterpatrone zur Reinigung des Öls einer ölgedichteten Vakuumpumpe, welche austauschbar an der Vakuumpume befestigt ist und Filtermaterialien enthält; in der Patrone (1) sind zwei Filterstufen (6, 7) mit unterschiedlichen Eigenschaften konzentrisch zueinander untergebracht; es handelt sich um eine mechanisch wirkende (6) und eine chemisch wirkende Filterstufe (7), wobei die mechanisch wirkende Filterstufe der chemisch wirkenden Filterstufe - in Strömungsrichtung des zu reinigenden Öls - vorgelagert ist; zur Bildung der chemisch wirkenden Filterstufe (7) ist eine aus aktiviertem Aluminiumoxid (17) oder Bleicherde bestehende Filterschicht vorgesehen, wobei dieses Ad- bzw. Absorbent in Form eines Granulates mit einer relativ groben Körnung von 0,5 bis 5 mm vorliegt; die mechanisch wirkende Filterstufe (6) ist ein der chemisch wirkenden Filterstufe vorgelagertes Papierfilter (15), dessen Eigenschaften so gewählt sind, daß es ein Abfangen von Feststoffteilchen bis zu einer Korngröße von weniger als 1 µm ermöglicht.

2. Filterpatrone nach Anspruch 1, dadurch gekennzeichnet, daß das in Form eines Granulates vorliegende Ad- bzw. Absorbent eine Körnung von 1 bis 3 mm hat.

3. Filterpatrone nach Anspruch 1 oder 2, dadurch gekennzeichnet, daß das Papierfilter (15) zur Vergrößerung der Oberfläche gefaltet ist.

4. Filterpatrone nach Anspruch 3, dadurch gekennzeichnet, daß dem gefalteten Papierfilter (15) auf der Abströmseite eine mechanische Stütze, bestehend aus einem Siebgewebe (16), zugeordnet ist.

5. Filterpatrone nach Anspruch 1, 2, 3 oder 4, dadurch gekennzeichnet, daß die mechanisch wirkende Filterstufe (6) die chemisch wirkende Filterstufe (7) umgibt und daß eine weitere mechanisch wirkende Filterstufe (21) der chemisch wirkenden Filterstufe nachgeordnet und konzentrisch darin angeordnet ist.

## Claims

1. Filter cartridge for cleaning the oil of an oil-sealed vacuum pump, which is fixed in an exchangeable manner to the vacuum pump and contains filter materials; two filter stages (6, 7) with different properties are housed concentrically to one another in the cartridge (1); these are a mechanically acting (6) and chemically acting filter stage (7), the mechanically acting filter stage being located upstream of the chemically acting filter stage in the flow direction of the oil to be cleaned; to form the chemically acting filter stage (7) a filter layer consisting of activated aluminium oxide (17) or active earth is provided, and this adsorbent or absorbent is present in the form of a granulated material with a relatively large grain size of 0.5 to 5 mm; the mechanically acting filter stage (6) is a paper filter (15) located upstream of the chemically acting filter stage and its properties are so selected that it is possible to trap solid particles of up to a grain size of less than 1 µm.

2. Filter cartridge according to claim 1, characterised in that the adsorbent or absorbent present in the form of a granulated material has a grain size of 1 to 3 mm.

3. Filter cartridge according to claim 1 or 2, characterised in that the paper filter (15) is folded to increase the surface area.

4. Filter cartridge according to claim 3, characterised in that a mechanical support, consisting of a filter fabric (16), is associated with the folded paper filter (15) on the downstream side.

5. Filter cartridge according to claim 1, 2, 3 or 4, characterised in that the mechanically acting filter stage (6) surrounds the chemically acting filter stage (7) and in that a further mechanically acting filter stage (21) is located downstream of the chemically acting filter stage and is disposed concentrically therein.

## Revendications

1. Cartouche de filtration pour épurer l'huile d'une pompe à vide étanchée à l'huile; cette cartouche (1), qui contient des matériaux filtrants, étant fixée, avec possibilité de remplacement, à la pompe à vide; deux étages de filtration (6, 7) dotés de propriétés différentes étant agencés concentriquement l'un par rapport à l'autre dans cette cartouche; le premier étage (6) agissant mécaniquement et l'autre étage (7) agissant chimiquement; l'étage de filtration agissant mécaniquement étant, en considérant la direction du courant de l'huile à épurer, disposé en amont de l'étage de filtration agissant chimiquement; une couche filtrante en oxyde d'aluminium activé (17) ou en argile absorbante étant prévue pour constituer l'étage de filtration agissant chimiquement (7); cet agent adsorbant ou absorbant étant présent sous la forme de granules ayant une grosseur de grain relativement grande, de 0,5 à 5 mm; l'étage de filtration agissant mécaniquement (6) étant un filtre en papier (15) disposé en amont de l'étage de filtration à action chimique, et les caractéristiques de ce filtre en papier étant choisies de manière à permettre une interception de particules solides jusqu'à une grosseur de grain inférieure à 1 µm.

2. Cartouche de filtration selon revendication 1, caractérisée par le fait que l'agent adsorbant ou absorbant présent sous la forme de granules présente une grosseur de grain de 1 à 3 mm.

3. Cartouche de filtration selon revendication 1 ou 2, caractérisée par le fait que le filtre en papier (15) est plié afin d'augmenter sa surface.

4. Cartouche de filtration selon revendication 3, caractérisée par le fait qu'un soutien mécanique, constitué par un tissu à tamis (16) est conjugué au filtre en papier plié (15), du côté aval.

5. Cartouche de filtration selon revendication 1, 2, 3 ou 4, caractérisée par le fait que l'étage de filtration agissant mécaniquement (6) entoure l'étage de filtration agissant chimiquement (7), et par le fait qu'un autre étage de filtration agissant mécaniquement (21) succède à l'étage de filtration agissant chimiquement, du côté intérieur duquel il est agencé concentriquement.
